# EUROPEAN PATENT APPLICATION

(11) **EP 4 696 898 A1**
(43) Date of publication of application: **18.02.2026**
(21) Application number: 24838336.6
(22) Date of filing: 19.03.2024
(51) Int. Cl.: F16C 11/12, F16C 11/04, H05K 5/02

(54) **COMPLIANT CONSTANT-STIFFNESS MECHANISM, ROTATING SHAFT APPARATUS AND TERMINAL DEVICE**

(30) Priority: 07.07.2023 CN 202310834135
(71) Applicant: Honor Device Co., Ltd., Shenzhen, Guangdong 518040 (CN)
(72) Inventor: MENG, Gang, Shenzhen, Guangdong 518040 (CN); DONG, Shaohong, Shenzhen, Guangdong 518040 (CN); CHEN, Ruihao, Shenzhen, Guangdong 518040 (CN); JIN, Kaifang, Shenzhen, Guangdong 518040 (CN)
(74) Representative: Gill Jennings & Every LLP
(86) International application number: PCT/CN2024/082321
(87) International publication number: WO 2025/011076

(57) **Abstract**

Embodiments of this application relate to the technical field of electronic devices, and provide a compliant constant-stiffness mechanism, a hinge assembly, and a terminal device. The compliant constant-stiffness mechanism includes at least one sheet-like compliant constant-stiffness body. The compliant constant-stiffness body includes a first force application portion, a second force application portion spaced apart from the first force application portion, and a deformation portion located between the first force application portion and the second force application portion, and connected to the first force application portion and the second force application portion. A side of the first force application portion facing away from the deformation portion is connected to an external object. A side of the second force application portion facing away from the deformation portion is connected to an external object. The deformation portion, the first force application portion, and the second force application portion are located in a first plane. The deformation portion is elastically deformable in the first plane. Since the compliant constant-stiffness body provided in the embodiment of this application is in a sheet-like structure, compared with a spring, larger elastic force can be provided at the same thickness, thereby facilitating the lightweight design of the applied apparatus.

## Description

This application claims priority to Chinese Patent Application No. 202310834135.7, filed in China on July 7, 2023, and entitled "COMPLIANT CONSTANT-STIFFNESS MECHANISM, HINGE ASSEMBLY, AND TERMINAL DEVICE", which is incorporated herein by reference in its entirety.

### TECHNICAL FIELD

This application relates to the technical field of electronic devices, and in particular, to a compliant constant-stiffness mechanism, a hinge assembly, and a terminal device.

### BACKGROUND

In apparatuses that require a rotation function, damping mechanisms are often used to provide damping force, resulting in resistance or torque during the rotation of the apparatuses. Damping mechanisms typically use helical springs to provide elastic force, thereby providing damping force.

For example, in foldable electronic devices that can be folded and unfolded (such as foldable phones, foldable tablets, and foldable computers), hinge assemblies usually incorporate damping mechanisms. The damping mechanisms usually adopt springs to provide elastic force, so that the foldable electronic devices have appropriate damping force in folding and unfolding processes, thereby helping to improve the stability and user's hand feel during operation.

However, the springs have a relatively large thickness, and it is difficult to provide sufficient elastic force and achieve the required damping performance at small sizes. Therefore, the springs usually need to be designed with large sizes, leading to large occupied space and affecting the lightweight design of the applied apparatus.

### TECHNICAL PROBLEMS

Embodiments of this application provide a compliant constant-stiffness mechanism, a hinge assembly, and a terminal device. This can alleviate the technical problem of large space occupied by the spring and difficulty in achieving lightweight design of the applied apparatus.

### SUMMARY

To solve the above technical problem, the technical solutions adopted by embodiments of this application are as follows:
According to a first aspect, an embodiment of this application provides a compliant constant-stiffness mechanism. The compliant constant-stiffness mechanism includes at least one sheet-like compliant constant-stiffness body. The compliant constant-stiffness body includes:
a first force application portion;
a second force application portion spaced apart from the first force application portion; and
a deformation portion located between the first force application portion and the second force application portion, and connected to the first force application portion and the second force application portion,
where a side of the first force application portion facing away from the deformation portion is connected to an external object, and a side of the second force application portion facing away from the deformation portion is connected to an external object; and the deformation portion, the first force application portion, and the second force application portion are located in a first plane, so that the deformation portion is elastically deformable in the first plane when the first force application portion moves towards or away from the second force application portion.

In some embodiments according to the first aspect, a direction that the first force application portion faces towards the second force application portion is a first direction, and the deformation portion includes multiple deformation structures sequentially connected along the first direction.

In some embodiments according to the first aspect, the deformation portion further includes multiple connection structures, and the connection structures are configured to connect two adjacent deformation structures.

In some embodiments according to the first aspect, each of the deformation structures includes two first elastic segments spaced apart along the first direction and two second elastic segments connected to free ends of the two first elastic segments, and each first elastic segment and each second elastic segment enclose to form a first deformation space.

In some embodiments of the first aspect, the second elastic segment is bent at least once in a second direction, and the second direction is perpendicular to the first direction.

In some embodiments according to the first aspect, each of the deformation structures includes at least two first supporting members, two second supporting members, and multiple first connecting members, the first supporting members extend along the first direction and are spaced apart from each other, the two second supporting members extend along the first direction and are located on two opposite sides of each first supporting member, two opposite ends of each first connecting member are respectively connected to adjacent first supporting members and second supporting members, and the two adjacent first connecting members and the corresponding two first supporting members enclose to form a second deformation space.

In some embodiments according to the first aspect, a direction that the first force application portion faces towards the second force application portion is a first direction, the deformation portion includes at least two third supporting members and multiple second connecting members, the third supporting members extend along the first direction and are spaced apart along a second direction, two opposite ends of each second connecting member are connected to two adjacent third supporting members, and two adjacent second connecting members and the corresponding two third supporting members enclose to form a third deformation space, and the second direction is perpendicular to the first direction.

In some embodiments according to the first aspect, two third supporting members are provided, and an extension direction of each second connecting member is parallel to the second direction.

In some embodiments according to the first aspect, three third supporting members are provided, two third supporting members are spaced apart along the first direction, the other third supporting member is spaced apart from the two third supporting members along the second direction, and an extension direction of each second connecting member is parallel to the second direction.

In some embodiments according to the first aspect, four third supporting members are provided, two third supporting members are spaced apart along the first direction, the other two third supporting members are located on two opposite sides of the two third supporting members along the second direction, and an extension direction of each second connecting member forms an acute angle with the second direction.

In some embodiments according to the first aspect, four third supporting members are provided, two third supporting members are spaced apart along the first direction, the other two third supporting members are located on two opposite sides of the two third supporting members along the second direction, and each second connecting member is bent at least thrice in the second direction.

In some embodiments according to the first aspect, the first force application portion includes any one or two of a block and a plate; and/or, the second force application portion includes any one or two of a block and a plate.

According to a second aspect, an embodiment of this application provides a hinge assembly, including:
a hinge mechanism and a damping mechanism, where the hinge mechanism includes a first supporting structure and a second supporting structure that rotate relative to each other, at least one damping mechanism is provided on each of the first supporting structure and the second supporting structure, the damping mechanism includes a damping member, a damping swing arm, and a compliant constant-stiffness body described above, the damping swing arm is slidably connected to the damping member, the damping swing arm moves relative to the damping member when the first supporting structure and the second supporting structure rotate relative to each other, and the compliant constant-stiffness body is elastically deformed when the damping member slides relative to the damping swing arm.

In some embodiments according to the second aspect, the damping mechanism further includes a cam stopper provided on the damping swing arm, the first force application portion and the second force application portion of the compliant constant-stiffness body are configured to abut against and adapt to the cam stopper, and the cam stopper presses against and squeezes the first force application portion and the second force application portion when the damping swing arm rotates relative to the damping member, so that the deformation portion of the compliant constant-stiffness body is elastically deformed.

In some embodiments according to the second aspect, a sidewall of the damping swing arm facing towards the first force application portion or the second force application portion of the compliant constant-stiffness body is provided with multiple first abutting surfaces, each first abutting surface forms a different included angle with a sliding direction of the damping swing arm, the damping swing arm is slidably arranged relative to the damping member, and the first force application portion or the second force application portion of the compliant constant-stiffness body is configured to abut against different first abutting surfaces, so that the deformation portion of the compliant constant-stiffness body is elastically deformed.

In some embodiments according to the second aspect, a sidewall of the damping swing arm facing towards the first force application portion or the second force application portion of the compliant constant-stiffness body is provided with second abutting surfaces, each second abutting surface forms an acute angle with a sliding direction of the damping swing arm, the damping swing arm is slidably arranged relative to the damping member, and the first force application portion or the second force application portion of the compliant constant-stiffness body is configured to abut against different second abutting surfaces, so that the deformation portion of the compliant constant-stiffness body is elastically deformed.

According to a third aspect, an embodiment of this application provides a terminal device. The terminal device includes:
the hinge assembly according to the second aspect;
a first housing and a second housing rotatably connected through the hinge assembly; and
a foldable screen arranged on the first housing and the second housing.

The compliant constant-stiffness mechanism provided in the embodiment of this application has the following beneficial effects: Since the compliant constant-stiffness mechanism provided in the embodiment of this application includes at least one compliant constant-stiffness body and the compliant constant-stiffness body is in a sheet-like structure, compared with a spring, larger elastic force can be provided at the same thickness, thereby facilitating the lightweight design of the applied apparatus. Since the deformation portion is elastically deformable between the first force application portion and the second force application portion and within the first plane, it facilitates providing elastic force between two external objects respectively connected to the first force application portion and the second force application portion.

It can be understood that for beneficial effects of the second aspect and the third aspect, reference may be made to the related descriptions in the first aspect. Details are not described herein.

### BRIEF DESCRIPTION OF DRAWINGS

FIG. 1 is a three-dimensional schematic structural diagram of a terminal device according to some embodiments of this application;
FIG. 2 is a schematic structural diagram of a hinge assembly according to embodiment 1 of this application;
FIG. 3 is a partial schematic diagram of a hinge assembly in FIG. 2;
FIG. 4 is a schematic structural diagram of a hinge assembly according to embodiment 2 of this application;
FIG. 5 is a partial schematic diagram of the hinge assembly in FIG. 4;
FIG. 6 is a partial schematic diagram of a hinge assembly according to embodiment 3 of this application;
FIG. 7 is a schematic structural diagram of a first type of compliant constant-stiffness mechanism according to embodiment 1 of this application;
FIG. 8 is a schematic structural diagram of a second type of compliant constant-stiffness mechanism according to embodiment 1 of this application;
FIG. 9 is a schematic structural diagram of a compliant constant-stiffness mechanism according to embodiment 2 of this application;
FIG. 10 is a schematic structural diagram of a compliant constant-stiffness mechanism according to embodiment 3 of this application;
FIG. 11 is a schematic structural diagram of a compliant constant-stiffness mechanism according to embodiment 4 of this application;
FIG. 12 is a schematic structural diagram of a compliant constant-stiffness mechanism according to embodiment 5 of this application; and
FIG. 13 is a schematic structural diagram of a compliant constant-stiffness mechanism according to embodiment 6 of this application.

### Description of reference numerals:

100-compliant constant-stiffness mechanism; 10-compliant constant-stiffness body; 11-first force application portion; 12-second force application portion; 13-deformation portion; 131-deformation structure; 132-connection structure; 1311-first elastic segment; 1312-second elastic segment; 13a-first deformation space; 1313-first supporting member; 1314-second supporting member; 1315-first connecting member; 13b-second deformation space; 1316-third supporting member; 1317-second connecting member; 13c-third deformation space;
1000-hinge assembly;
200-hinge mechanism; 201-first supporting structure; 202-second supporting structure;
300-damping mechanism; 301-damping member; 302-damping swing arm; 303-cam stopper; 3021-first abutting surface; 3022-second abutting surface;
10000-terminal device; 2000-first housing; 3000-second housing; 4000-foldable screen; 4100-foldable portion;
X-first direction; and Y-second direction.

### DESCRIPTION OF EMBODIMENTS

Embodiments of this application will be described in detail below, and examples of embodiments are shown in the accompanying drawings, where same or similar elements or elements having same or similar functions are denoted by same or similar reference numerals throughout the description. Embodiments described below with reference to the accompanying drawings are examples, are intended to explain this application, and cannot be construed as limitations to this application.

Unless otherwise defined, meanings of all technical and scientific terms used in this description are the same as those usually understood by those skilled in the art to which this application belongs. The terms used herein are only for the purpose of describing the specific embodiments, instead of limiting the scope of this application. In addition, the terms "include", "have", and any variant thereof in the specification, claims, and accompanying drawings of this application are intended to cover a non-exclusive inclusion.

In the description of this application, it should be understood that orientation or position relationships indicated by the terms, such as "length", "width", "thickness", "top", "bottom", "inner", "outer", "up", and "down" are based on orientation or position relationships shown in the accompanying drawings, and are used only for ease and brevity of illustration and description, rather than indicating or implying that the mentioned apparatus or component needs to have a particular orientation or needs be constructed and operated in a particular orientation. Therefore, such terms should not be construed as limitations to this application.

The terms "first", "second", "third", "fourth", "fifth", and "sixth" are used merely for distinguishing description, and should not be construed as indicating or implying relative importance or implicitly indicating the quantity of indicated technical features. For example, a first deformation space and a second deformation space are merely used to distinguish between different deformation spaces, and are not intended to limit a sequence thereof. The first deformation space may alternatively be referred to as the second deformation space, and the second deformation space may alternatively be referred to as the first deformation space without departing from the scope of various described embodiments. In addition, the terms such as "first" and "second" do not limit that the indicated features are necessarily different.

In this application, unless otherwise specified and defined explicitly, the terms such as "connect", and "connection" should be understood in a broad sense. For example, it may be fixed connection, detachable connection, or integral connection; it may be mechanical connection or electrical connection; it may be direct connection, indirect connection through an intermediate medium, or internal communication between two elements or interaction between two elements. Those skilled in the art may understand the specific meanings of the foregoing terms in this application based on specific situations.

In this application, "and/or" only describes an association between associated objects and represents that three relationships may exist. For example, A and/or B may represent the following three cases: only A exists, both A and B exist, and only B exists. In addition, the character "/" herein generally indicates an "or" relationship between associated objects.

It needs to be stated that in this application, the terms, such as "in some embodiments", "exemplarily", or "for example", are used to represent giving an example, an illustration, or a description. In this application, any embodiment or design scheme described by using "in some embodiments", "exemplarily", or "for example" should not be explained as being more preferred or having more advantages than another embodiment or design scheme. Exactly, use of the terms, such as "in some embodiments", "exemplarily", and "for example", is intended to present a relative concept in a specific manner.

To make the objectives, technical solutions, and advantages of this application clearer, the following further describes this application in detail with reference to the accompanying drawings and embodiments.

In apparatuses that require a rotation function (such as foldable electronic devices, foldable doors, and sliding doors), damping mechanisms are often used to provide damping force, resulting in resistance or torque during the rotation of the apparatuses. Damping mechanisms typically use helical springs to provide elastic force to obtain squeezing force, thereby providing damping force.

For example, in foldable electronic devices that can be folded and unfolded (such as foldable phones, foldable tablets, foldable computers, and notebook computers), hinge assemblies usually incorporate damping mechanisms. The damping mechanisms usually adopt springs to provide elastic force or squeezing force, so that the foldable electronic devices have appropriate damping force in folding and unfolding processes, thereby helping to improve the stability of the foldable electronic devices in different states and user's hand feel during operation.

However, due to the helical shape, the springs are structurally constrained to have a relatively large thickness, and therefore have a relatively large outer diameter, and it is difficult to provide sufficient elastic force and achieve the required damping performance at small sizes. Therefore, the springs usually need to be designed with large sizes, leading to large occupied space of the applied apparatus and affecting the lightweight design of the applied apparatus. For example, the spring makes the overall thickness of the hinge assembly of foldable electronic device relatively large, consequently affecting the lightweight design of the foldable electronic device.

In view of this, embodiments of this application provide a compliant constant-stiffness mechanism, a hinge assembly including the compliant constant-stiffness mechanism, and a terminal device including the hinge assembly. This can alleviate the technical problem that the lightweight design of the applied apparatus (such as terminal device) is affected by the large space occupied by the spring in related technologies, and help to provide sufficient elastic force while reducing space occupation.

The terminal device provided in this embodiment of this application is a foldable electronic device, that is, an electronic device that can be folded and unfolded. The terminal device may be a mobile phone, a tablet computer, a laptop computer (laptop), a notebook computer (notebook PC), a personal digital assistant (PDA), a wearable device (such as watch), a vehicle-mounted device, an augmented reality (AR) device/virtual reality (VR) device, a point of sales (POS) terminal, an event data recorder, a walkie-talkie, a camera, a display, or the like, but is not limited thereto.

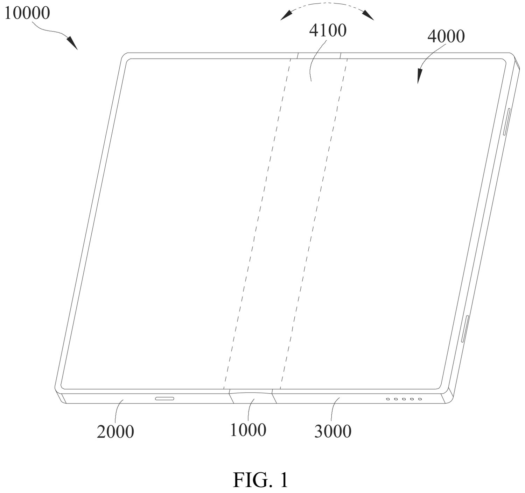

Refer to FIG. 1. FIG. 1 is a three-dimensional schematic structural diagram of a terminal device 10000 in an unfolded state according to some embodiments of this application. In this embodiment of this application, description will be made by taking the terminal device 10000 being a mobile phone as an example.

The terminal device 10000 includes a hinge assembly 1000, a first housing 2000, a second housing 3000, and a foldable screen 4000.

The first housing 2000 and the second housing 3000 are rotatably connected through the hinge assembly 1000. That is, the first housing 2000 and the second housing 3000 may rotate relative to each other based on the hinge assembly 1000, so that they can rotate toward each other to enable the terminal device 10000 to be in a folded state, and can rotate away from each other to enable the terminal device 10000 to be in an unfolded state. In some cases, the terminal device 10000 may also be in an intermediate state between the unfolded state and the folded state.

It can be understood that the first housing 2000 and the second housing 3000 may be a middle frame, and their specific shapes and structures may be configured according to the needs.

The foldable screen 4000 is arranged on the first housing 2000 and the second housing 3000, and can be folded or unfolded as the first housing 2000 and the second housing 3000 rotate. A position of a foldable portion 4100 of the foldable screen 4000 corresponds to a position of the hinge assembly 1000. The foldable portion 4100, i.e., the portion that can be bent, is flexible, so that when the first housing 2000 and the second housing 3000 rotate relative to each other, the foldable screen 4000 can be folded by bending the foldable portion 4100. When the foldable screen 4000 is in the folded state, the foldable portion 4100 may be drop-shaped or U-shaped. However, this application is not limited to this shape.

It can be understood that a screen body portion of the foldable screen 4000 corresponding to the first housing 2000 may be flexible or rigid; a screen body portion of the foldable screen 4000 corresponding to the second housing 3000 may be flexible or rigid.

A back surface of the foldable screen 4000 is a surface facing towards the hinge assembly 1000, and may also be considered as a non-display surface of the foldable screen 4000; a front surface of the foldable screen 4000 is a surface facing away from the hinge assembly 1000, that is, a display surface of the foldable screen 4000 that is used for displaying an image.

When the terminal device 10000 is in the unfolded state, the foldable screen 4000 is also in the unfolded state, and the first housing 2000 and the second housing 3000 are roughly in the same plane, that is, an included angle between the first housing 2000 and the second housing 3000 is approximately 180°. In this case, the foldable screen 4000 is roughly flat, so that the terminal device 10000 has a larger display area. It should be understood that when the terminal device 10000 is in the unfolded state, the included angle between the first housing 2000 and the second housing 3000 is not limited to be absolutely 180°. The included angle between the first housing 2000 and the second housing 3000 may also be greater than or less than 180°, but close to 180°. For example, the included angle may range from 165° to 190° (such as 170°, 173°, 175°, 182°, or 185°, but this application is not limited thereto), and the foldable screen 4000 can also be unfolded.

When the terminal device 10000 is in the folded state, the foldable screen 4000 is also in the folded state, and the first housing 2000 and the second housing 3000 are roughly parallel, that is, an included angle between the first housing 2000 and the second housing 3000 is approximately 0°. In this case, the foldable screen 4000 is folded through its foldable portion 4100 to facilitate the storage of the terminal device 10000. It should be understood that when the terminal device 10000 in the folded state, the first housing 2000 and the second housing 3000 are not absolutely parallel, the included angle between the first housing 2000 and the second housing 3000 may alternatively be greater than 0°, but close to 0°. For example, the included angle may range from 0° to 15° (for example, 1°, 2°, 3°, 5°, or 10°, but this application is not limited thereto), and the foldable screen 4000 can also be folded.

In some embodiments, the terminal device 10000 may be an outward-folding terminal device, and the foldable screen 4000 is an outward-folding foldable screen. In the folding process of the terminal device 10000, the first housing 2000 and the second housing 3000 may rotate relative to each other along a direction indicated by arc-shaped lines with arrows at two ends as shown in FIG. 1. After the foldable screen 4000 is folded, a display surface of the foldable screen 4000 is exposed, and the first housing 2000 and the second housing 3000 are located in the foldable screen 4000.

Certainly, in some other embodiments, the terminal device 10000 may alternatively be an inward-folding terminal device, and the foldable screen 4000 is an inward-folding foldable screen. After the foldable screen 4000 is folded, the foldable screen 4000 is located between the first housing 2000 and the second housing 3000.

Since the foldable screen 4000 is a key component in the foldable terminal device 10000, in the process of switching the folding mode among the unfolded state, the folded state, and the intermediate state of the terminal device 10000, in a case that the first housing 2000, the second housing 3000, and the hinge assembly 1000 of the terminal device 10000 cannot provide stable supporting force for the foldable screen 4000, it may cause abnormal display of the foldable screen 4000 under the influence of external pulling or squeezing force. From the introduction to the terminal device 10000 in the above embodiments, it can be understood that the folding of the terminal device 10000 relies on the cooperation of the hinge assembly 1000. Based on this, a damping assembly may be arranged in the hinge assembly 1000, so that the damping assembly can damping force to the terminal device 10000 in the folding mode switching process of the terminal device 10000, so as to achieve stable support for the foldable screen 4000 and improve the stability of the terminal device 10000 in different folding modes and user's hand feel during operation.

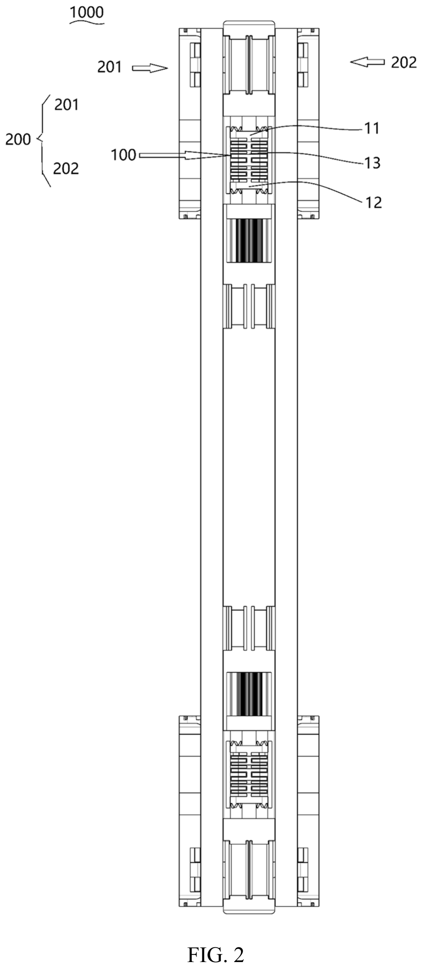

Refer to FIG. 2 to FIG. 6. The hinge assembly 1000 includes a hinge mechanism 200 and a damping mechanism 300. The hinge mechanism 200 includes a first supporting structure 201 and a second supporting structure 202 that rotate relative to each other. At least one damping mechanism 300 is provided on each of the first supporting structure 201 and the second supporting structure 202. The damping mechanism 300 includes a damping member 301, a damping swing arm 302, and a compliant constant-stiffness mechanism 100. The damping swing arm 302 is slidably connected to the damping member 301. The damping swing arm 302 is configured to move relative to the damping member 301 when the first supporting structure 201 and the second supporting structure 202 rotate relative to each other, and the compliant constant-stiffness mechanism 100 is elastically deformed when the damping member 301 slides relative to the damping swing arm 302.

Here, the first supporting structure 201 and the second supporting structure 202 are configured to connect to the first housing 2000 and the second housing 3000 of the terminal device 10000, so that they can open and close as the first housing 2000 and the second housing 3000 rotate relative to each other.

Multiple damping mechanisms 300 may be provided, and the multiple damping mechanisms 300 are respectively arranged on the first supporting structure 201 or the second supporting structure 202. The damping mechanism 300 located on one side of the first supporting structure 201 may be connected to the first housing 2000 of the terminal device 10000 in the above embodiment, and similarly, the damping mechanism 300 located on the other side of the second supporting structure 202 may be connected to the second housing 3000 of the terminal device 10000 in the above embodiment, so that the damping force generated by the damping mechanism 300 can be transmitted to the corresponding housing, thereby helping to provide reliable supporting force for the entire terminal device 10000. It can be understood that the damping mechanisms 300 arranged on the same side may directly contact and be fixed to the housing, or the damping mechanisms 300 may be fixed to the housing through other possible structures, thereby achieving indirect fixation between the damping mechanisms 300 and the housing.

Specifically, the damping swing arm 302 of the damping mechanism 300 is connected to the corresponding supporting structure, and under the driving of the corresponding supporting structure, the damping swing arm experiences relative movement with respect to the damping member 301. Here, relative movement may refer to that the damping swing arm 302 is slidably arranged relative to the damping member 301 in a certain direction; alternatively, it may refer to that the damping swing arm 302 rotates around the axis relative to the damping member 301 in a certain direction. In this way, when the damping swing arm 302 moves relative to the damping member 301, a squeezing force is formed on the compliant constant-stiffness mechanism 100, causing the compliant constant-stiffness mechanism to be elastically deformed to provide corresponding damping sensation.

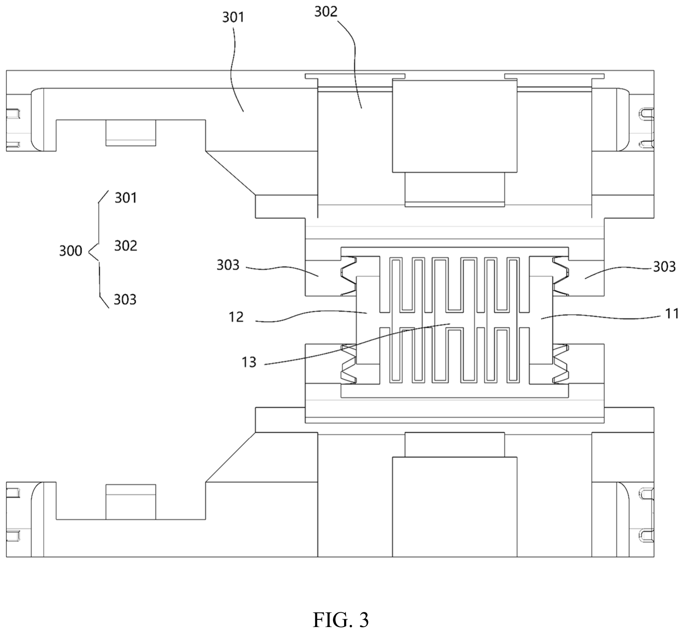

Refer to FIG. 2 and FIG. 3. In some embodiments, the damping mechanism 300 further includes a cam stopper 303 provided on the damping swing arm 302, the first force application portion 11 and the second force application portion 12 of the compliant constant-stiffness mechanism 100 are configured to abut against and adapt to the cam stopper 303, and the cam stopper 303 presses against and squeezes the first force application portion 11 and the second force application portion 12 when the damping swing arm 302 rotates relative to the damping member 301, so that the deformation portion of the compliant constant-stiffness mechanism 100 is elastically deformed.

Here, both the first force application portion 11 and the second force application portion 12 are adapted to the cam stopper 303. Therefore, the first force application portion 11 and the second force application portion 12 may be cam structures or cam-like structures, thereby forming an adapted connection relationship with the cam stopper 303.

Specifically, the first force application portion 11 and the second force application portion 12 are respectively provided with a cam structure that can be abutted against and connected to the cam stopper 303. When the damping swing arm 302 rotates relative to the damping member 301, the cam stopper 303 can rotate around the axis with the damping swing arm 302, thereby forming a relative squeezing force on the cam structures on each force application portion. The direction of the squeezing force is a direction that the first force application portion 11 faces towards the second force application portion 12, or a direction that the second force application portion 12 faces towards the first force application portion 11. In this way, the deformation portion of the compliant constant-stiffness mechanism 100 is squeezed and elastically deformed to provide corresponding damping force.

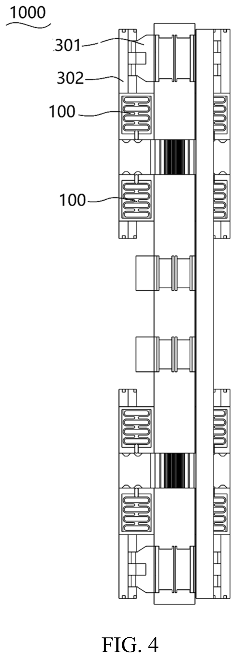

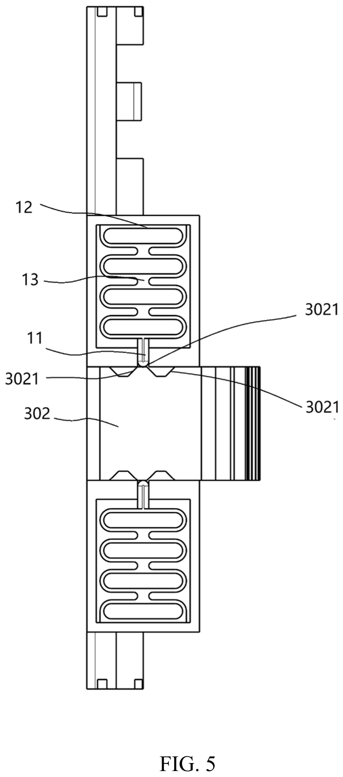

Refer to FIG. 4 and FIG. 5. In some embodiments, a sidewall of the damping swing arm 302 facing towards the first force application portion 11 or the second force application portion 12 of the compliant constant-stiffness mechanism 100 is provided with multiple first abutting surfaces 3021, each first abutting surface 3021 forms a different included angle with a sliding direction of the damping swing arm 302, the damping swing arm 302 is slidably arranged relative to the damping member 301, and the first force application portion 11 or the second force application portion 12 of the compliant constant-stiffness mechanism 100 is configured to abut against different first abutting surfaces 3021, so that the deformation portion of the compliant constant-stiffness mechanism 100 is elastically deformed.

Here, the movement mode of the damping swing arm 302 relative to the damping member 301 is relative sliding, for example, along a width direction of the compliant constant-stiffness mechanism 100. The width direction is perpendicular to a direction that the compliant constant-stiffness mechanism 100 is squeezed and deformed.

By arranging the multiple first abutting surfaces 3021, the damping swing arm 302 can exert multiple squeezing effects on the first force application portion 11 or the second force application portion 12 when it slides relative to the damping member 301, so as to achieve different rotating states of the rotating apparatus.

Optionally, referring to FIG. 5, three first abutting surfaces 3021 are provided, the three first abutting surfaces 3021 are sequentially arranged along the sliding direction of the damping swing arm 302, one first abutting surfaces 3021 is a horizontal plane parallel to the sliding direction of the damping swing arm 302, the other two first abutting surfaces 3021 are distributed on two sides of the first abutting surface 3021, and the other two first abutting surfaces 3021 are obliquely arranged in the sliding direction of the damping swing arm 302. In this way, when the first supporting structure 201 is in an unfolded state relative to the second supporting structure 202, the compliant constant-stiffness mechanism 100 is abutted against the first abutting surface 3021 at a first position; when the first supporting structure 201 is in a folded state relative to the second supporting structure 202, the compliant constant-stiffness mechanism 100 is abutted against the first abutting surface 3021 at a third position; and when the first supporting structure 201 is in a hovering state relative to the second supporting structure 202, the compliant constant-stiffness mechanism 100 is abutted against the first abutting surface 3021 at a middle position.

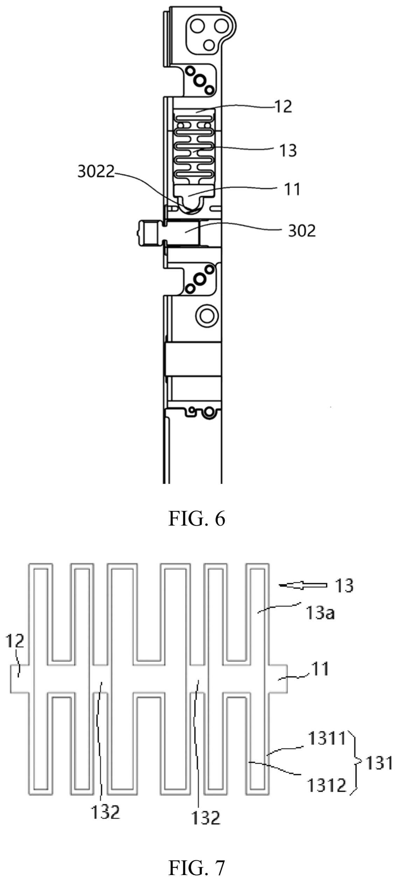

Refer to FIG. 6. In some embodiments, a sidewall of the damping swing arm 302 facing towards the first force application portion 11 or the second force application portion 12 of the compliant constant-stiffness mechanism 100 is provided with second abutting surfaces 3022, each second abutting surface 3022 forms an acute angle with a sliding direction of the damping swing arm 302, the damping swing arm 302 is slidably arranged relative to the damping member 301, and the first force application portion 11 or the second force application portion 12 of the compliant constant-stiffness mechanism 100 is configured to abut against different second abutting surfaces 3022, so that the deformation portion of the compliant constant-stiffness mechanism 100 is elastically deformed.

Here, the movement mode of the damping swing arm 302 relative to the damping member 301 is relative sliding, for example, along a width direction of the compliant constant-stiffness mechanism 100. The width direction is perpendicular to a direction that the compliant constant-stiffness mechanism 100 is squeezed and deformed.

In the sliding process of the damping swing arm 302 relative to the damping member 301, the first force application portion 11 or the second force application portion 12 slides along the second abutting surface 3022. In the sliding process, the deformation portion of the compliant constant-stiffness mechanism 100 is squeezed or elongated. Therefore, in this embodiment, the rotating apparatus can obtain continuous damping force in the rotation process.

The compliant constant-stiffness mechanism 100 provided in this embodiment of this application will be described below.

Refer to FIG. 7 to FIG. 12. The compliant constant-stiffness mechanism 100 includes at least one sheet-like compliant constant-stiffness body 10. The compliant constant-stiffness body 10 includes a first force application portion 11, a second force application portion 12, and a deformation portion 13. The second force application portion 12 is spaced apart from the first force application portion 11. The deformation portion 13 is located between the first force application portion 11 and the second force application portion 12, and connected to the first force application portion 11 and the second force application portion 12.

A side of the first force application portion 11 facing away from the deformation portion 13 is connected to an external object. A side of the second force application portion 12 facing away from the deformation portion 13 is connected to an external object. The deformation portion 13, the first force application portion 11, and the second force application portion 12 are located in a first plane, so that the deformation portion 13 is elastically deformable in the first plane when the first force application portion 11 moves towards or away from the second force application portion 12.

It can be understood that the compliant constant-stiffness mechanism 100 may be composed of one or more compliant constant-stiffness bodies 10, the compliant constant-stiffness bodies 10 can maintain constant stiffness within a working range, that is, their stiffness characteristics remain unchanged or basically unchanged, the output force-displacement relationship is the same as that of conventional spring, and the same good linear characteristics are achieved. Here, "compliant" represents that the compliant constant-stiffness body 10 is adaptively deformable.

The compliant constant-stiffness body 10 has a sheet-like structure, and is roughly sheet-like or plate-shaped. The first force application portion 11, the second force application portion 12, and the deformation portion 13 are portions of the compliant constant-stiffness body 10. The first force application portion 11, the second force application portion 12, and the deformation portion 13 may be an integrally formed structure. For example, they may be made of a plate or a sheet by adopting manufacturing processes such as punching, laser cutting, and wire cutting, or they may be formed by casting such as die casting. Of course, at least two of the first force application portion 11, the second force application portion 12, and the deformation portion 13 may also be separately formed and then connected. Here, the first force application portion 11 and/or the second force application portion 12 are rigid portions of the compliant constant-stiffness body 10, and the deformation portion 13 may be a compliant portion or a portion that is both compliant and rigid.

The first force application portion 11 and the second force application portion 12 may be structures with various shapes, such as strip-shaped structures (which may be linear strip-shaped structures or curved strip-shaped structures), block-shaped structures, edge structures, or surface structures, but this application is not limited thereto. FIG. 1 exemplarily shows the case that both the first force application portion 11 and the second force application portion 12 are linear strip-shaped structures. The shape of the first force application portion 11 and the shape of the second force application portion 12 may be the same or different. Since the side of the first force application portion 11 facing away from the deformation portion 13 is formed for connecting to (abutting against or fixedly connecting to) an external object, there is no need to arrange a protruding structure on the side of the first force application portion 11 facing away from the deformation portion 13. Similarly, since the side of the second force application portion 12 facing away from the deformation portion 13 is formed for connecting to (abutting against or fixedly connecting to) an external object, there is no need to arrange a protruding structure on the side of the second force application portion 12 facing away from the deformation portion 13. The external object refers to any object other than the compliant constant-stiffness body 10. The compliant constant-stiffness body 10 can provide elastic force to the external object.

The deformation portion 13, the first force application portion 11, and the second force application portion 12 being in the first plane can enable the deformation portion to deform only in the first plane, thereby reducing the probability that the deformation portion is warped or bent due to deformation. The first plane is a plane where the three are coplanar. It may be a horizontal plane or a vertical plane.

Exemplarily, referring to FIG. 2, the first force application portion 11 may be connected to the cam stopper 303 in the above embodiment, and the second force application portion 12 may be connected to the damping member 301 in the above embodiment. When the damping swing arm 302 rotates relative to the damping member 301, a force is applied to the first force application portion, the first force application portion 11 moves towards the second force application portion 12 to apply a squeezing force to the deformation portion 13, and the deformation portion 13 may be elastically deformed to provide an elastic force, thereby generating damping between the damping swing arm 302 and the damping member 301.

It can be understood that the material of the compliant constant-stiffness body 10 may include a metal material with good toughness. Exemplarily, the metal material may include, but not limited to, stainless steel, spring steel (such as 65Mn steel), or the like, and may be specifically selected according to the required elastic force. Stainless steel may include austenitic cold-rolled stainless steel strip for springs, 304 stainless steel, or other stainless steel made of materials with good toughness. In this way, the compliant constant-stiffness body 10 can have good toughness, so as to ensure that the yield strength (which refers to the yield limit of the metal material when yielding, and is a critical stress value for the metal material to yield; the higher the yield strength, the stronger the ability of the metal material to resist deformation) of the material of the compliant constant-stiffness body 10 is not easily exceeded when the compliant constant-stiffness body 10 is deformed under stress, thereby effectively reducing the possibility of plastic deformation of the compliant constant-stiffness body 10.

From the above, it can be seen that since the compliant constant-stiffness mechanism 100 provided in this embodiment of this application includes at least one compliant constant-stiffness body 10 and the compliant constant-stiffness body 10 is in a sheet-like structure, compared with a spring, larger elastic force can be provided at the same thickness, that is, the thickness is smaller while providing the same elastic force, thereby facilitating the lightweight design of the applied apparatus, for example, facilitating the lightweight design of the terminal device 10000 when applied to the terminal device 10000. Since the deformation portion 13 is elastically deformable between the first force application portion 11 and the second force application portion 12, it facilitates providing elastic force between two external objects respectively connected to the first force application portion 11 and the second force application portion 12.

The compliant constant-stiffness mechanism 100 provided in this embodiment of this application may be applied not only to the terminal devices 10000, but also to various apparatuses that require the use of elastic elements, that is, it can replace elastic elements such as springs.

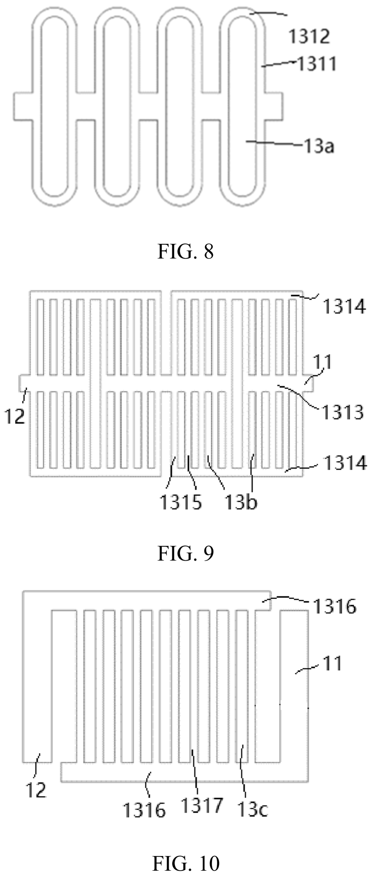

Refer to FIG. 7 and FIG. 8. In some embodiments, a direction that the first force application portion 11 faces towards the second force application portion 12 is a first direction X, and the deformation portion includes multiple deformation structures 131 sequentially connected along the first direction X.

Here, for the convenience of description, the direction that the first force application portion 11 faces towards the second force application portion 12 is defined as the first direction X, that is, in this case, the first force application portion 11 is a portion that applies the force, while the second force application portion 12 is a portion that bears the force.

The deformation structures 131 being sequentially connected in the first direction X can be understood as a series connection mode of the deformation structures 131, that is, this series connection mode can transfer the force from one deformation structure 131 to a next deformation structure 131, and each deformation structure 131 is deformed sequentially. Here, the deformation structures 131 are constant-stiffness portions of the compliant constant-stiffness body 10.

Refer to FIG. 7. In some embodiments, the deformation portion 13 further includes multiple connection structures 132, and the connection structures 132 are configured to connect two adjacent deformation structures.

It can be understood that in the first direction X, the deformation structures 131 are directly connected without any other connection structure 132 participating in the auxiliary connection; alternatively, the deformation structures 131 may also be indirectly connected, for example, through corresponding connection structures 132.

Here, each connection structure 132 should be a rigid structure that does not undergo deformation or undergoes minimal deformation, and be used for enhancing the transmission of deformation force between adjacent deformation structures 131. For example, each connection structure 132 may be a connecting block, a connecting strip, a connecting plate, or the like. According to actual use requirements, each connection structure 132 may selectively have stiffness in a certain direction or in all directions.

Refer to FIG. 7. In some embodiments, each deformation structure 131 includes two first elastic segments 1311 spaced apart along the first direction X and two second elastic segments 1312 connected to free ends of the two first elastic segments 1311, and each first elastic segment 1311 and each second elastic segment 1312 enclose to form a first deformation space 13a.

It can be understood that the first deformation space 13a is one or more through holes that penetrate through the compliant constant-stiffness mechanism 100 along the thickness direction of the compliant constant-stiffness mechanism 100, and the through hole may be in, but not limited to, various regular or irregular shapes, such as rectangular shape, diamond shape, and circular shape.

The first elastic segment 1311 and the second elastic segment 1312 are elastically deformed when subjected to a force along the first direction X, resulting in a corresponding change in the shape of the through hole as the first deformation space 13a.

Refer to FIG. 7 and FIG. 8. In some embodiments, the second elastic segment 1312 is bent at least once in a second direction, and the second direction Y is perpendicular to the first direction X.

Here, the first direction X may be the length direction of the compliant constant-stiffness mechanism 100, and the second direction Y may be the width direction of the compliant constant-stiffness mechanism 100. According to the actual use requirements, the number of bending times of the second elastic segment 1312 in the second direction Y may be selected. For example, as shown in FIG. 8, the second elastic segment 1312 is bent once in the second direction Y, and the second elastic segment 1312 is enabled to protrude or recess along the second direction Y. For another example, as shown in FIG. 7, the second elastic segment 1312 is bent four times in the second direction Y, and the second elastic segment 1312 is enabled to protrude or recess along the second direction Y.

It needs to be stated that the result of bending may be right-angle bending or an arc-shaped transition bending, or both right-angle bending and arc-shaped transition bending.

Refer to FIG. 9. In some embodiments, each deformation structure 131 includes at least two first supporting members 1313, two second supporting members 1314, and multiple first connecting members 1315, the first supporting members 1313 extend along the first direction X and are spaced apart from each other, the two second supporting members 1314 extend along the first direction X and are located on two opposite sides of each first supporting member 1313, two opposite ends of each first connecting member 1315 are respectively connected to adjacent first supporting members 1313 and second supporting members 1314, and the two adjacent first connecting members 1315 and the corresponding two first supporting members 1313 enclose to form a second deformation space 13b.

It can be understood that the second deformation space 13b is one or more through holes that penetrate through the compliant constant-stiffness mechanism 100 along the thickness direction of the compliant constant-stiffness mechanism 100, and the through hole may be in, but not limited to, various regular or irregular shapes, such as rectangular shape, diamond shape, and circular shape.

Specifically, as shown in FIG. 9, two deformation structures 131 are sequentially connected along the first direction X, each deformation structure 131 has two first supporting members 1313 and two second supporting members 1314, five first connecting members 1315 are provided between two adjacent first supporting member 1313 and second supporting members, so that each deformation structure 131 has sixteen second deformation spaces 13b, and the size and shape of all second deformation spaces 13b are respectively the same. Of course, when the spacing between any two adjacent first connecting members 1315 is not equal, the size of the second deformation space 13b also changes accordingly.

Refer to FIG. 10 to FIG. 13. In some embodiments, the direction that the first force application portion 11 faces towards the second force application portion 12 is a first direction X, the deformation portion 13 includes at least two third supporting members 1316 and multiple second connecting members 1317, the third supporting members 1316 extend along the first direction X and are spaced apart along a second direction Y, two opposite ends of each second connecting member 1317 are connected to two adjacent third supporting members 1316, and two adjacent second connecting members 1317 and the corresponding two third supporting members 1316 enclose to form a third deformation space 13c, and the second direction Y is perpendicular to the first direction X.

It can be understood that the third deformation space is one or more through holes that penetrate through the compliant constant-stiffness mechanism 100 along the thickness direction of the compliant constant-stiffness mechanism 100, and the through hole may be in, but not limited to, various regular or irregular shapes, such as rectangular shape, diamond shape, and circular shape.

Here, the first direction X may be the length direction of the compliant constant-stiffness mechanism 100, and the second direction Y may be the width direction of the compliant constant-stiffness mechanism 100.

In this embodiment, each second connecting member 1317 is similarly connected in parallel between two adjacent third supporting members 1316, that is, two opposite ends of each connecting member are respectively connected to the corresponding third supporting members 1316, and then the corresponding third supporting members 1316 are connected to the first force application portion 11 or the second force application portion 12.

Refer to FIG. 10. In some embodiments, two third supporting members 1316 are provided, and an extension direction of each second connecting member 1317 is parallel to the second direction Y.

It can be understood that the two third supporting members 1316 are arranged parallel to each other, and all second connecting members 1317 are spaced apart between the two third supporting members 1316.

Specifically, as shown in FIG. 10, ten second connecting members 1317 are provided, so that nine third deformation spaces 13c are formed, and each third deformation space 13c has the same size and shape. Of course, when the spacing between any two adjacent second connecting members 1317 is not equal, the size of the third deformation space 13c also changes accordingly.

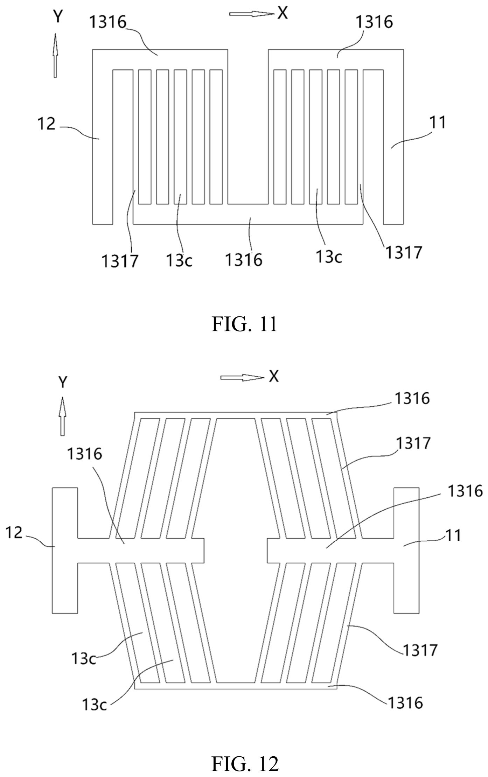

Refer to FIG. 11. In some embodiments, three third supporting members 1316 are provided, two third supporting members 1316 are spaced apart along the first direction X, the other third supporting member 1316 is spaced apart from the two third supporting members 1316 along the second direction Y, and an extension direction of each second connecting member 1317 is parallel to the second direction Y.

It can be understood that two third supporting members 1316 on the same side are arranged parallel to the other third supporting member 1316, and all second connecting members 1317 are spaced apart between any two third supporting members 1316. This embodiment may be a variation of the above embodiment, that is, one third supporting member 1316 in the above embodiment is truncated.

Specifically, as shown in FIG. 11, twelve second connecting members 1317 are provided, so that ten third deformation spaces 13c are formed, five third deformation spaces 13c are in one group, and the other five third deformation spaces 13c are in another group. Of course, when the spacing between any two adjacent second connecting members 1317 is not equal, the size of the third deformation space 13c also changes accordingly.

Refer to FIG. 12. In some embodiments, four third supporting members 1316 are provided, two third supporting members 1316 are spaced apart along the first direction X, the other two third supporting members 1316 are located on two opposite sides of the two third supporting members 1316 along the second direction Y, and an extension direction of each second connecting member 1317 forms an acute angle with the second direction Y.

It can be understood that the two third supporting members 1316 on the two opposite sides are arranged parallel to each other, and all second connecting members 1317 are spaced apart between the two adjacent third supporting members 1316.

Specifically, as shown in FIG. 12, sixteen second connecting members 1317 are provided, so that twelve third deformation spaces 13c are formed, every three third deformation spaces 13c are in a group, and the third deformation spaces 13c are arranged in a diamond shape.

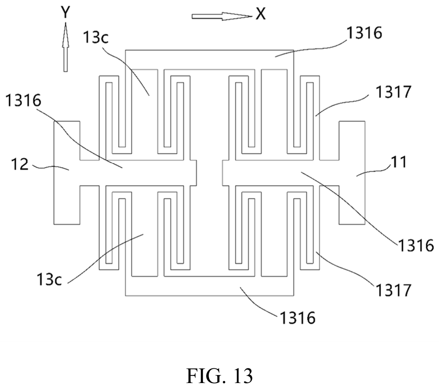

Refer to FIG. 13. In some embodiments, four third supporting members 1316 are provided, two third supporting members 1316 are spaced apart along the first direction X, the other two third supporting members 1316 are located on two opposite sides of the two third supporting members 1316 along the second direction Y, and each second connecting member 1317 is bent at least thrice in the second direction Y.

It can be understood that the two third supporting members 1316 on the two opposite sides are arranged parallel to each other, and all second connecting members 1317 are spaced apart between the two adjacent third supporting members 1316.

Specifically, as shown in FIG. 13, eight second connecting members 1317 are provided, so that four third deformation spaces 13c are formed, and each second connecting member 1317 is bent thrice in the second direction Y.

Refer to the figures. In some embodiments, the first force application portion 11 includes any one or two of a block and a plate; and/or, the second force application portion 12 includes any one or two of a block and a plate.

It can be understood that, as shown in FIG. 3 and FIG. 7, the first force application portion 11 and the second force application portion 12 are both blocks, and each block may be directly adapted to an external structure, such as the cam stopper 303 on the damping swing arm 302 in the above embodiment, or directly adapted to the first abutting surface 3021 or the second abutting surface 3022 of the damping swing arm 302.

Alternatively, as shown in FIG. 10 to FIG. 13, the first force application portion 11 and the second force application portion 12 are both plates, and each plate is extended and arranged in the second direction Y of the compliant constant-stiffness body 10, that is, it may be adapted to the corresponding external structure.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A compliant constant-stiffness mechanism, comprising at least one sheet-like compliant constant-stiffness body, the compliant constant-stiffness body comprising:
a first force application portion;
a second force application portion spaced apart from the first force application portion; and
a deformation portion located between the first force application portion and the second force application portion, and connected to the first force application portion and the second force application portion,
wherein a side of the first force application portion facing away from the deformation portion is configured to connecte to an external object, and a side of the second force application portion facing away from the deformation portion is configured to connecte to an external object; and wherein the deformation portion, the first force application portion and the second force application portion are located in a first plane, so that the deformation portion is elastically deformable in the first plane when the first force application portion moves towards or away from the second force application portion.

2. The compliant constant-stiffness mechanism according to claim 1, wherein a direction that the first force application portion faces towards the second force application portion is a first direction, and the deformation portion comprises a plurality of deformation structures sequentially connected along the first direction.

3. The compliant constant-stiffness mechanism according to claim 2, wherein the deformation portion further comprises a plurality of connection structures, and the connection structures are configured to connect two adjacent deformation structures.

4. The compliant constant-stiffness mechanism according to claim 2 or 3, wherein each of the deformation structures comprises two first elastic segments spaced apart along the first direction and two second elastic segments connected to free ends of the two first elastic segments, and each first elastic segment and each second elastic segment enclose to form a first deformation space.

5. The compliant constant-stiffness mechanism according to claim 4, wherein the second elastic segment is bent at least once in a second direction, and the second direction is perpendicular to the first direction.

6. The compliant constant-stiffness mechanism according to claim 2 or 3, wherein each of the deformation structures comprises at least two first supporting members, two second supporting members, and a plurality of first connecting members, the first supporting members extend along the first direction and are spaced apart from each other, the two second supporting members extend along the first direction and are located on two opposite sides of each first supporting member, two opposite ends of each first connecting member are respectively connected to adjacent first supporting members and second supporting members, and the two adjacent first connecting members and the corresponding two first supporting members enclose to form a second deformation space.

7. The compliant constant-stiffness mechanism according to claim 1, wherein a direction that the first force application portion faces towards the second force application portion is a first direction, the deformation portion comprises at least two third supporting members and a plurality of second connecting members, the third supporting members extend along the first direction and are spaced apart along a second direction, two opposite ends of each second connecting member are connected to two adjacent third supporting members, and two adjacent second connecting members and the corresponding two third supporting members enclose to form a third deformation space, and the second direction is perpendicular to the first direction.

8. The compliant constant-stiffness mechanism according to claim 7, wherein two third supporting members are provided, and an extension direction of each second connecting member is parallel to the second direction.

9. The compliant constant-stiffness mechanism according to claim 7, wherein three third supporting members are provided, two third supporting members are spaced apart along the first direction, the other third supporting member is spaced apart from the two third supporting members along the second direction, and an extension direction of each second connecting member is parallel to the second direction.

10. The compliant constant-stiffness mechanism according to claim 7, wherein four third supporting members are provided, two third supporting members are spaced apart along the first direction, the other two third supporting members are located on two opposite sides of the two third supporting members along the second direction, and an extension direction of each second connecting member forms an acute angle with the second direction.

11. The compliant constant-stiffness mechanism according to claim 7, wherein four third supporting members are provided, two third supporting members are spaced apart along the first direction, the other two third supporting members are located on two opposite sides of the two third supporting members along the second direction, and each second connecting member is bent at least thrice in the second direction.

12. The compliant constant-stiffness mechanism according to any one of claims 1 to 11, wherein the first force application portion comprises any one or two of a block and a plate; and/or, the second force application portion comprises any one or two of a block and a plate.

13. A hinge assembly, comprising a hinge mechanism and a damping mechanism, wherein the hinge mechanism comprises a first supporting structure and a second supporting structure that rotate relative to each other, at least one damping mechanism is provided on each of the first supporting structure and the second supporting structure, the damping mechanism comprises a damping member, a damping swing arm, and a compliant constant-stiffness body according to any one of claims 1 to 12, the damping swing arm is slidably connected to the damping member, the damping swing arm moves relative to the damping member when the first supporting structure and the second supporting structure rotate relative to each other, and the compliant constant-stiffness body is elastically deformed when the damping member moves relative to the damping swing arm.

14. The hinge assembly according to claim 13, wherein the damping mechanism further comprises a cam stopper provided on the damping swing arm, the first force application portion and the second force application portion of the compliant constant-stiffness body are configured to abut against and adapt to the cam stopper, and the cam stopper presses against and squeezes the first force application portion and the second force application portion when the damping swing arm rotates relative to the damping member, so that the deformation portion of the compliant constant-stiffness body is elastically deformed.

15. The hinge assembly according to claim 13, wherein a sidewall of the damping swing arm facing towards the first force application portion or the second force application portion of the compliant constant-stiffness body is provided with a plurality of first abutting surfaces, each first abutting surface forms a different included angle with a sliding direction of the damping swing arm, the damping swing arm is slidably arranged relative to the damping member, and the first force application portion or the second force application portion of the compliant constant-stiffness body is configured to abut against different first abutting surfaces, so that the deformation portion of the compliant constant-stiffness body is elastically deformed.

16. The hinge assembly according to claim 13, wherein a sidewall of the damping swing arm facing towards the first force application portion or the second force application portion of the compliant constant-stiffness body is provided with second abutting surfaces, each second abutting surface forms an acute angle with a sliding direction of the damping swing arm, the damping swing arm is slidably arranged relative to the damping member, and the first force application portion or the second force application portion of the compliant constant-stiffness body is configured to abut against different second abutting surfaces, so that the deformation portion of the compliant constant-stiffness body is elastically deformed.

17. A terminal device, comprising:
the hinge assembly according to any one of claims 13 to 16;
a first housing and a second housing rotatably connected through the hinge assembly; and
a foldable screen arranged on the first housing and the second housing.
